# FASCICULE DE BREVET EUROPEEN

(11) **EP 0 979 787 B1**
(45) Date de publication et mention de la délivrance du brevet: **02.03.2005**
(21) Numéro de dépôt: 99402012.1
(22) Date de dépôt: 06.08.1999
(51) Int. Cl.: B65G 47/08, B65G 23/14

(54) **Dispositif pour la constitution de lots d'objets juxtaposés et installation comprenant un tel dispositif.**
Vorrichtung zum Bilden von Gruppen nebeneinanderliegender Gegenstände und Anlage mit einer solchen Vorrichtung
Device for constituting batches of juxtaposed articles and facility with such a device

(30) Priorité: 12.08.1998 FR 9810342
(43) Date de publication de la demande: 16.02.2000
(73) Titulaire: ARIES PACKAGING, 10430 Rosieres-Pres-Troyes (FR)
(72) Inventeur: De Guglielmo, Pascal, 10300 Montgueux (FR)
(74) Mandataire: Derambure, Christian

(56) Documents cités:
- EP-A- 0 709 317
- WO-A-96/22223
- CH-A- 463 370
- GB-A- 1 364 730
- US-A- 5 035 315
- US-A- 5 311 722
- US-A- 5 755 317

## Description

L'invention se rapporte à la constitution et l'emballage de lots d'objet juxtaposés.

Elle concerne plus particulièrement un dispositif pour la constitution de lots successifs distincts d'objets juxtaposés ; une installation pour le conditionnement d'objets ainsi groupés en lots ; et, enfin, un procédé de mise en oeuvre d'une telle installation.

L'invention est plus spécialement destinée à des produits alimentaires sous emballage primaire telle que barquette.

De tels objets sont, typiquement, de forme prismatique aplatie, dont chaque côté a de l'ordre de quelques à une dizaine de centimètres, voire plus, et d'un poids de l'ordre de quelques dizaines à quelques centaines de grammes.

Ces objets sont par exemple, typiquement des aliments pour chats ou chiens, des produits lactés pour l'homme, des compotes, etc.

Les impératifs des dispositifs, installations et procédés tels que ceux qui sont spécifiques considérés ici sont le débit, la fiabilité de fonctionnement et la qualité du produit obtenu.

Il est connu que les objets à emballer se présentent unitairement aplatis ; qu'ils sont disposés avec leurs grandes faces horizontales pendant le processus de réalisation (notamment remplissage des barquettes) ; qu'ils sont emballés en étant groupés en lots, juxtaposés par leur grandes faces.

Le document WO-A-92/21597 concerne un dispositif pour faire passer des sacs d'une position horizontale successive à une position verticale adjacente.

Toutefois, ce dispositif n'est pas adapté pour satisfaire les impératifs qui sont ici visés en relation avec l'application particulière considérée.

On peut se référer également au document WO-A-97410 relatif à des biscuits, au document FR-A-2750 122 relatif à des boîtes de lait ou de jus de fruits.

Le document EP-A-452 497 décrit un système de roue à palettes profilées permettant de placer des objets - en l'occurrence cylindrique sur chant.

Le document EP-A-749 917 décrit un dispositif de stockage et de groupement pour rassembler des produits en forme de pièces pour faire un stockage tampon.

Le document EP-A-709 317 décrit un système pour le transfert ordonné d'objet entre deux convoyeurs disposés sensiblement perpendiculairement.

L'invention qui est tout spécialement destinée à l'application spécifique mentionnée plus haut vise à assurer un débit élevé en même temps qu'une grande fiabilité de fonctionnement et ce avec des produits finis de grande qualité.

A cet effet, selon un premier aspect l'invention concerne un dispositif pour la constitution de lots successifs distincts d'objets - tels que ceux mentionnés plus haut - juxtaposés.

Ce dispositif comprend :
- un ensemble constitué par deux convoyeurs distincts placés côte à côte, ayant chacun une même succession d'alvéoles ou analogues, apte à recevoir chacune un lot d'objets juxtaposés ;
- des moyens d'amenée des objets un a un transversalement dans une alvéole de l'un ou l'autre des convoyeurs, lorsqu'il se présente dans une certaine position d'amenée située vers l'amont de l'ensemble à deux convoyeurs ;
- des moyens d'entraînement de l'un et de l'autre des convoyeurs ;
- des moyens programmés de commande du fonctionnement des moyens d'amenée et des moyens d'entraînement de l'un et de l'autre des convoyeurs agencés pour que l'une des deux successions d'alvéoles une fois remplies d'objets juxtaposés soit transférée à une position d'évacuation des objets écartée vers l'aval sur l'ensemble à deux convoyeurs pendant que l'autre des deux successions d'alvéoles est transférée à la position d'amenée.

Selon d'autres caractéristiques de ce dispositif la longueur de l'ensemble à deux convoyeurs est telle qu'il comprend au moins deux successions d'alvéoles.

Les moyens programmés de commande sont tels que le convoyeur dont les alvéoles successifs sont remplis au fur et à mesure grâce aux moyens d'amenée soit entraîné en continu à une certaine vitesse V1 sensiblement constante de façon coordonnée à celle des moyens d'amenée ;

Les moyens programmés de commande sont tels qu'également, une fois que le dernier alvéole du convoyeur est rempli, le convoyeur est entraîné à une certaine vitesse V2 jusqu'à la position d'évacuation.

La vitesse V2 est plus grande que la vitesse V1.

Par exemple elle est de l'ordre de 5 à 10 fois la vitesse V1.

Les moyens programmés de commande sont tels également que la succession d'alvéoles, d'un convoyeur étant amenée en position d'évacuation des objets, le convoyeur est arrêté pendant la durée permettant de vider les alvéoles par transfert transversal des objets qui s'y trouvent.

Les moyens programmés de commande sont tels également qu'après arrêt du convoyeur avec les alvéoles en position d'évacuation des objets, le convoyeur est entraîné à une vitesse V3 jusqu'à ce que son premier alvéole amont vienne succéder à la position d'amenée du dernier alvéole aval de la succession d'alvéoles de l'autre convoyeur en cours de remplissage .

La vitesse V3 est plus grande que la vitesse V1 par exemple elle est de l'ordre de 5 à 15 fois la vitesse V1.

En particulier la vitesse V3 est égale ou de l'ordre de 1,5 fois la vitesse V2.

Les deux convoyeurs se déplacent tous les deux et toujours dans le même sens.

Un alvéole est agencé pour tenir un objet essentiellement par dessous et pour une alvéole d'extrémité latéralement en amont ou en aval, respectivement selon une autre caractéristique et une réalisation particulière.

Les moyens d'amorce des objets se présentent sous la forme d'un tambour comportant une paroi périphérique présentant au moins une rampe de rayon croissant dans le sens de rotation normal du tambour, cette rampe étant terminée par une face radiale d'appui formant logement pour un objet.

En général il est prévu plusieurs paires de rampes et faces d'appui, par exemple quatre régulièrement disposées autour de l'axe du tambour.

Le tambour présente des flasques sur lesquels sont ménagés les rampes et faces d'appui, écartés par un espace vide traversé par la partie extrême amont de l'ensemble à deux convoyeurs. Le tambour des moyens d'amenée pivote de façon continue.

Selon un autre aspect, l'invention concerne une installation pour le conditionnement d'objets en lots d'objets juxtaposés qui comprend des moyens d'alimentation en objets à l'aval duquel se trouve des moyens d'amenée des objets d'un dispositif tel qu'il a été décrit précédemment.

Selon d'autres caractéristiques de l'installation des moyens d'alimentation en objet se présentent sous la forme d'un convoyeur.

Les moyens d'alimentation coopérant avec une certaine première position d'un logement des moyens d'amenée de l'ensemble à deux convoyeurs coopèrent avec une seconde positon d'un logement des moyens d'amenée, la seconde position succédant à la première.

Selon une réalisation les moyens d'amenée sont à axe horizontal et transversal, la première et seconde position du logement des moyens d'amenée étant à 90° l'un de l'autre, la première position étant placée à un niveau supérieur et la seconde position à un niveau inférieur.

L'installation qui vient d'être décrite comporte en outre des moyens associés aux moyens d'alimentation aptes à ordonner et cadencer les objets pour qu'ils présentent l'orientation, le positionnement, la disposition et l'écartement voulus.

Les moyens pour ordonner et cadencer les objets en question se présentent, dans une réalisation sous la forme d'une roue à palettes radiale commandée par des moyens moteurs associés au moyens programmés de commande.

L'installation qui vient d'être décrite est telle qu'il leur est associé en outre des moyens d'emballage situés vers la position d'évacuation des objets, ainsi que des moyens d'évacuation des alvéoles et d'alimentation des moyens d'emballage.

Ces moyens d'emballage sont par exemple des moyens d'encaissage, de mise sous film ou analogue.

Ces moyens d'évacuation des alvéoles et d'alimentation des moyens d'emballage sont par exemple un poussoir, un robot ou analogue.

Selon un troisième aspect, l'invention concerne un procédé de mise en oeuvre de l'installation qui vient d'être décrite dans lequel, successivement,
- on amène les objets sur les moyens d'alimentation.
- on ordonne et on cadence le objets de façon voulue.
- On permet aux moyens d'amenée des objets de prendre les objets ainsi ordonnés et cadencés depuis la première position jusqu'à la seconde position.
- On amène deux successions d'alvéoles des deux convoyeurs à se suivre à l'endroit de la position d'amenée.
- On réalise un lot d'objets sur l'un des convoyeurs pendant que l'on transfère un lot réalisé se trouvant sur l'autre des convoyeurs vers la position d'évacuation, éventuellement on débute l'emballage.
- Lorsque le lot est réalisé on le transfère à la position d'évacuation.

Comme il a été indiqué, l'invention est tout spécialement adaptée aux objets ayant les caractéristiques mentionnées plus haut.

L'invention permet d'emballer des lots de l'ordre de 5 à 30 objets chacun à raison de l'ordre de 15 à 80 lots par minute.

L'invention sera bien comprise grâce aux dessins annexés dans lesquels :

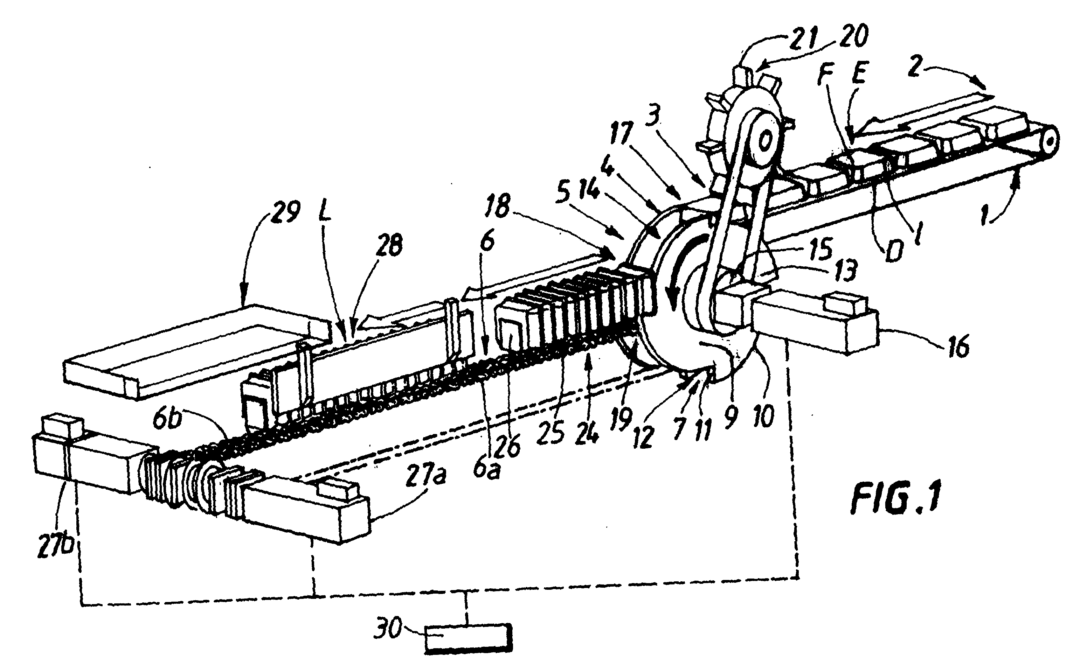

la figure 1 est une vue shématique d'ensemble en perspective d'une installation selon l'invention comportant des emballages en cours de traitement.

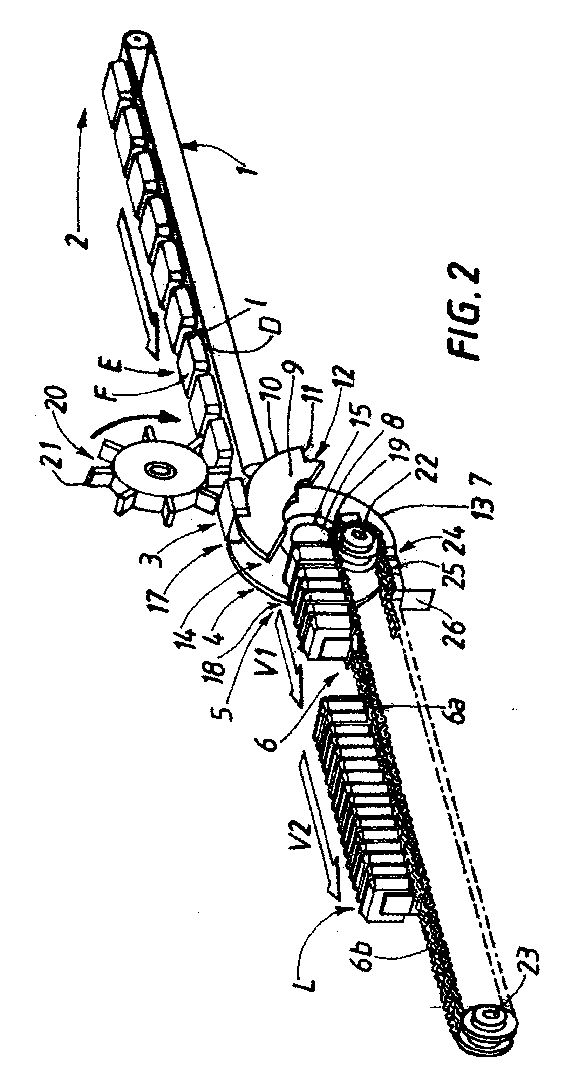

La figure 2 est une vue en perspective simplifiée de l'installation, une partie des moyens d'amenée étant arrachée, une succession d'alvéoles se trouvant en situation de remplissage et l'autre succession d'alvéoles allant en situation d'évacuation.

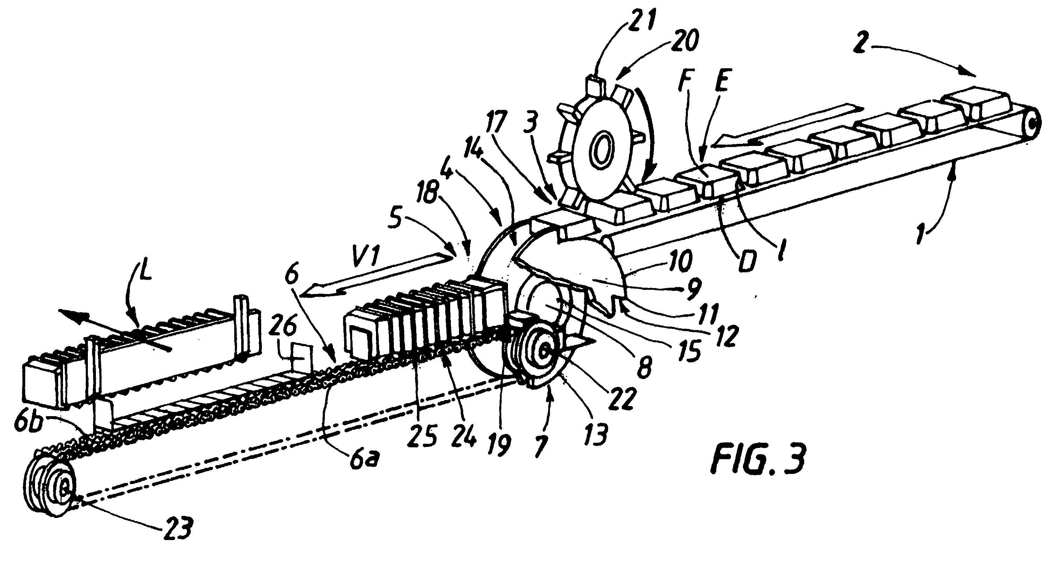

La figure 3 est une vue en perspective simplifiée de l'installation, une partie des moyens d'amenée étant arrachée, une succession d'alvéoles se trouvant en situation de remplissage et l'autre succession d'alvéoles en situation d'évacuation.

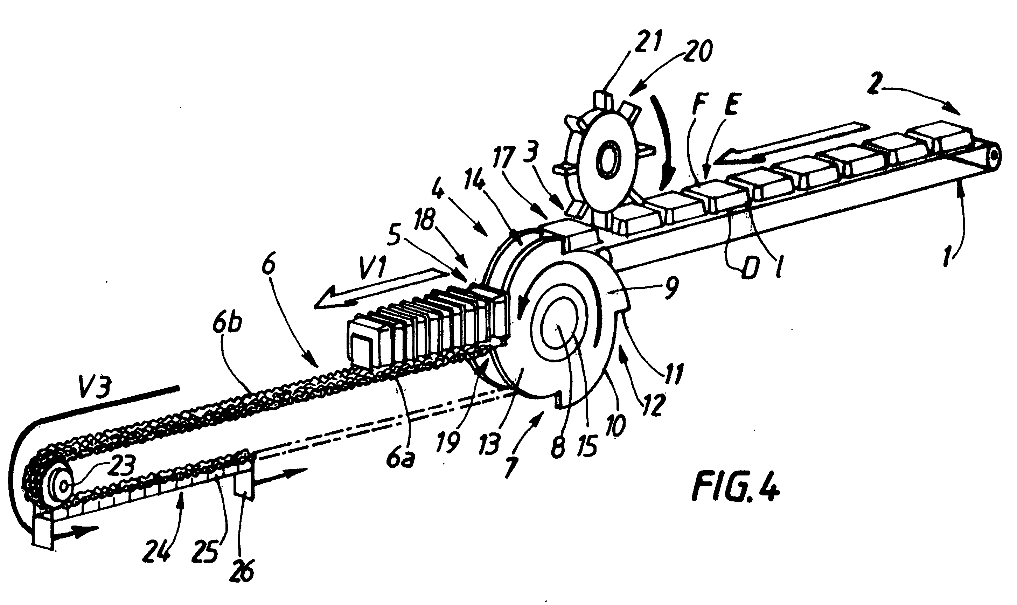

La figure 4 est une vue en perspective simplifiée de l'installation, une succession d'alvéoles se trouvant en situation de remplissage et l'autre succession d'alvéoles allant en situation d'attente.

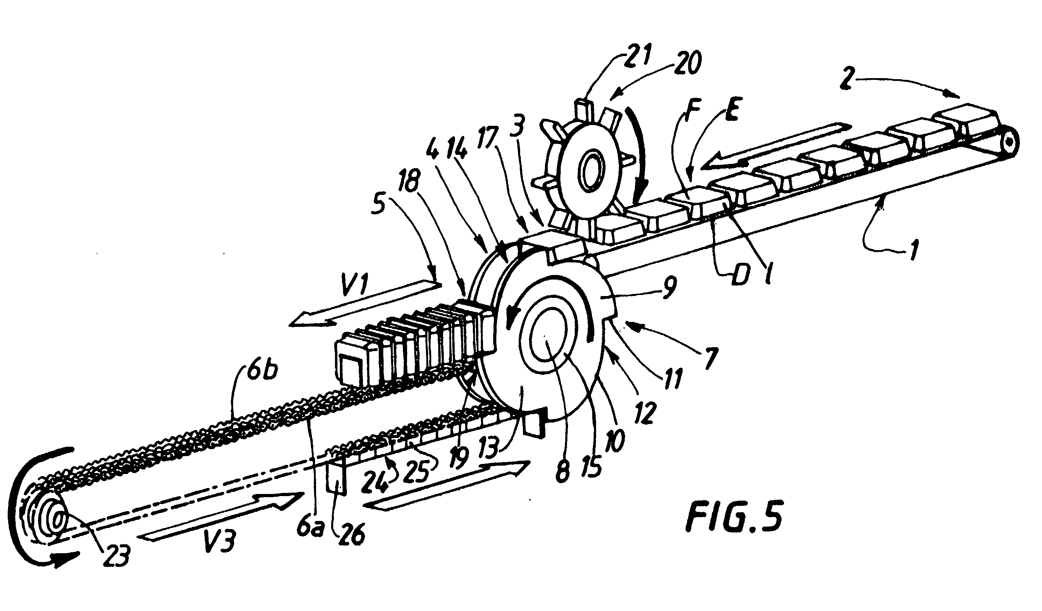

La figure 5 est une vue perspective simplifiée de l'installation, une succession d'alvéoles se trouvant en situation de remplissage et l'autre succession d'alvéoles allant en situation d'attente.

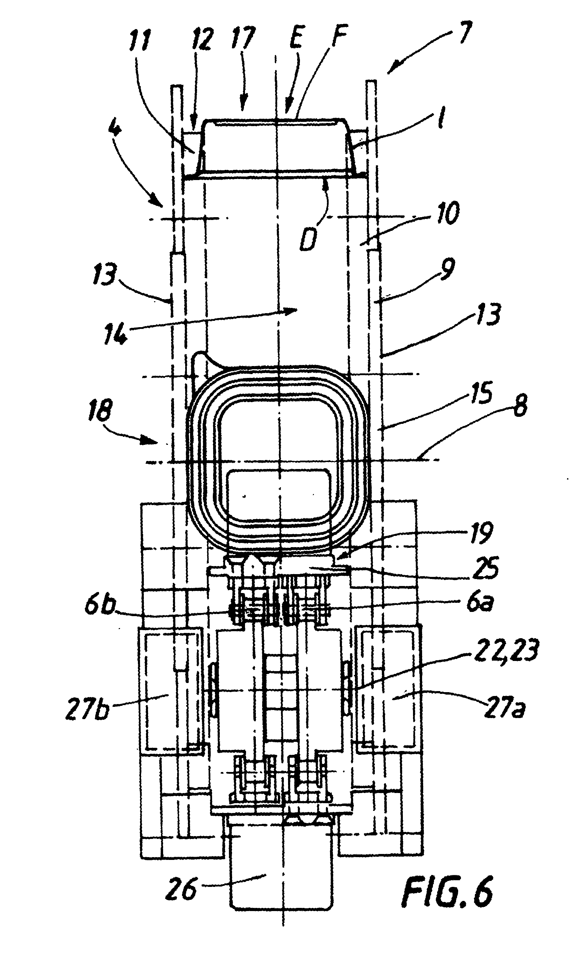

La figure 6 est une vue frontale du côté aval de l'installation selon l'invention.

On se réfère aux dessins qui illustrent shématiquement une installation pour la conditionnement en lots L d'objets E juxtaposés.

Les objets E, sont, typiquement de forme prismatique aplatie, dont chaque côté peut avoir de l'ordre de quelques à une dizaines de centimètres, voire plus, et un poids de l'ordre de quelques dizaines à quelques centaines de grammes.

Ces objets E sont par exemple des aliments pour chats ou chiens, de produits lactés pour l'homme, des compotes conditionnées dans un emballage primaire tel qu'une barquette.

Ce désigne ici par F le fond, D le dessus et 1 la face latérale de charge barquette ou objet E.

Dans la réalisation représentée, la barquette E en position normale ou usuelle a une disposition de tronc de pyramide aplati, à section carré, la petite base étant en F, la grande base en D.

La position normale ou usuelle est celle que présente la barquette E pour son utilisation mais aussi pour sa confection, notamment son remplissage.

On définit également pour la barquette E une position sur chant ou la barquette repose verticalement sur un côté de sa face latérale 1.

L'installation selon l'invention est placée, dans un ensemble, en aval de la fabrication de barquettes E.

L'installation comprend d'amont en aval des moyens d'alimentation 1 en objets, tels qu'un convoyeur à bande de direction générale horizontale sur lequel les barquettes E sont déposées en amont 2 après leur fabrication.

Naturellement, les moyens d'alimentation 1 peuvent se présenter autrement que sous la forme d'un convoyeur à bande.

En aval 3 du convoyeur 1 se trouvent des moyens 4 d'amenée des barquettes une à une transversalement vers l'amont 5 d'un ensemble 6.

Les moyens d'amenée 4 se présentent dans la réalisation représentée sous la forme d'un tambour 7 d'axe 8 transversal comportant une paroi périphérique 9 présentant plusieurs rampes 10 de rayon croissant dans le sens de rotation normal du tambour 7.

Chaque rampe 10 est terminée par une face radiale 11 d'appui formant un logement 12 pour une barquette .

Il y a autant de rampes que de faces d'appui 11 et donc de logements 12.

Par exemple, il est prévu quatre faces de rampes 10, faces d'appui 11 et logements 12 régulièrement répartis autour de l'axe 8 à 90°.

Le tambour 7 est agencé pour que sa paroi périphérique 9 soit formée par le bord périphérique extérieur de deux flasques 13.

Par conséquent, les rampes 10, faces d'appui 4 et logements 12 sont ménagés par les bords des deux flasques, identiques entre eux, écartés l'un de l'autre mais en correspondance l'un avec l'autre.

Les deux flasques 13 sont écartés l'un de l'autre par un espace vide 14.

Cet espace vide 14 est traversé longitudinalement par la partie extrême amont 5 de l'ensemble 6.

Les deux flasques 13 sont montés calés sur un arbre 15, d'axe 8 entraîné en rotation, ici de façon continue à vitesse constante - en régime normal - par des moyens d'entraînement 16 tel qu'un moteur ou un moto-réducteur.

Les moyens d'amenée 4 comportent, s'agissant du logement, deux positions de référence, à savoir une première position 17 et une seconde position 18, la seconde position 18 succédant à la première lorsque les moyens d'amenée sont en mouvement - en l'occurrence pivotant autour de l'axe 8.

La première position 17 est située dans le prolongement des moyens d'alimentation 1, vers l'aval.

La seconde positon 18 est située en correspondance avec une position d'amenée 19 sur laquelle on revient par la suite, cette position concernant l'ensemble 6.

La première position 17 est placée à un niveau supérieur - celui des moyens d'alimentation 1 - tandis que la seconde position 18 est placée à un niveau inférieur.

Dans la réalisation considérée, les deux positions 17, 18 sont à 90° l'une de l'autre.

Vers l'aval 3 du convoyeur est prévu, dans la réalisation considérée, des moyens 20 associés aux moyens d'alimentation 1 agencés et aptes à ordonner et cadencer les barquettes E pour qu'elles présentent, juste avant leur prise par les moyens d'amenée 4, l'orientation, le positionnement, la disposition et l'écartement voulus.

Dans une réalisation les moyens 20 se présentent sous la forme d'une roue ayant des palettes radiale 21. Cette roue 20 est commandé par des moyens moteurs non représentés asservis aux moyens programmés de commandes 30 de l'installation.

En aval des moyens d'amenée se trouve l'ensemble 6.

L'ensemble 6 est constitué de deux convoyeurs 6a et 6b.

Ces deux convoyeurs 6a, 6b sont analogues.

Ils sont, toutefois, distincts bien que placés côte à côte.

Les convoyeurs 6a, 6b sont typiquement de convoyeurs à chaînes tendues entre des tambours amont et aval d'axe horizontaux et transversaux respectivement 22 et 23.

Chaque convoyeur 6a, 6b comporte sur une certaine longueur, une succession 24 d'alvéoles 25 ou analogue (taquet, logement, creux, saillie, doigt, palette, etc).

Une succession ou groupe 24 d'alvéoles 25 comporte autant de places ou position que le nombre d'objets formant le lot de barquettes E à réaliser.

Par exemple, selon une réalisation typique il est prévu, par lot, de l'ordre de 5 à 30 barquettes, la succession 24 comportant autant d'alvéoles.

Les deux successions 24 d'alvéoles des deux convoyeurs 6a, 6b est telle que deux successions 24 d'alvéoles peuvent s'y trouver, l'une vers l'aval, l'autre vers l'amont, sans interférer l'une avec l'autre.

En d'autres terme la longueur utile est au moins égale à deux fois la longueur des lots de barquettes E.

Les alvéoles 25 sont conçues pour que les barquettes E y soient sur chant.

Par conséquent entre le convoyeur des moyens d'alimentation 1 et l'ensemble 6 la barquette E ont été pivotées de 90° et ce grâce aux moyens d'amenée 4.

Sur l'ensemble 6 à deux convoyeurs 6a, 6b les barquettes E sont juxtaposées le fond des barquettes E juxtante - notamment étant appliqué contre- le dossier de la barquette E voisine.

Un alvéole 25 est conformé et agencé pour être apte à tenir une barquette E par dessous afin quelle se tienne verticalement, c'est à dire que son fond F et son dessus sont verticaux. Dans le cas où la face latérale 1 est inclinée l'alvéole 25 est agencé en conséquence.

Le cas échéant un alvéole 25 d'extrémité comporte une palette latérale 26 en avant ou en aval respectivement facilitant la tenue verticale des barquettes E.

Les moyens d'amenée 4 qui prennent les barquette E du convoyeur d'alimentation 1, convenablement déposée grâce aux moyens 20, les amenent une à une transversalement en l'occurrence de haut en bas dans l'alvéole 25 associé à la seconde position 18 du logement 12.

Cet alvéole particulier se trouve dans la position dite d'amenée 19.

Celle-ci est située vers l'amont de l'ensemble 6, à proximité immédiate et vers l'extrémité des bords des flasques 13.

Les convoyeurs 6a, 6b sont entraînés dans le même sens mais séparément par des moyens d'entraînement 27a, 27b, respectivement, tels que moteur ou moteur-réducteur.

Une succession 24 d'alvéoles 25 se trouve dans trois situation différentes.

D'abord une situation de remplissage. Ensuite une situation d'évacuation et, enfin, une situation d'attente.

La situation de remplissage et la situation d'attente correspondant chacune à une plage de position correspondant à la course d'un lot sur l'ensemble 6.

La situation d'évacuation correspond à une position donnée.

Dans la situation de remplissage la succession 24 est placée vers l'amont de l'ensemble 6, en étant adjacente vers l'aval des moyens d'amenée 4.

Dans la situation - ou position - d'évacuation, la succession 24 est écartée vers l'aval de la situation de remplissage.

Dans la situation de remplissage les alvéoles 25 de la succession 24 sont remplis proprement par les barquettes E amenées une à une par les moyens 4.

Dans la situation d'évacuation, la succession 24 des alvéoles 25, tous remplis, est écartée vers l'aval de manière que les barquettes E puissent être transférées par des moyens 28 d'évacuation des barquettes E des alvéoles 25 et d'alimentation de moyens d'emballage 29 tels que moyens d'encaissage, de mise sous films ou analogue.

Les moyens 28 sont par exemple, un poussoir, un robot ou analogue.

Les moyens 29 sont placés transversalement à côté de l'ensemble 6 vers l'aval.

Les moyens 28 assurent, par exemple, une translation horizontale des barquettes E.

L'installation comporte également des moyens programmés de commande 30 du fonctionnement des moyens d'alimentation 1, des moyens 20, des moyens d'amenée 4 et des deux convoyeurs 6a, 6b de l'ensemble 6.

Les moyens de commande 30 sont agencés de manière que :
- Deux successions 24 d'alvéoles 25 des deux convoyeurs se suivent à l'endroit de la position d'amenée. Cela signifie alors qu'une succession 24 d'alvéoles 25 de l'un des convoyeurs - par exemple 6a - est en situation de remplissage, une succession 24 d'alvéoles 25 de l'autre des convoyeurs -6b- est en situation d'attente. Dès lors, les moyens 4 peuvent alimenter les alvéoles 25 qui se suivent toujours qu'ils appartiennent à l'un ou -puis- à l'autre des convoyeurs.
- Une succession 24 d'alvéoles 25 étant remplie de barquettes E juxtaposées, cette succession passe de la situation de remplissage à la position d'évacuation.
- Une succession 24 en position d'évacuation reste à l'arrêt -le convoyeur correspondant étant arrêté- pendant la durée permettant de vider les alvéoles 25 par transfert transversal des barquettes E grâce aux moyens 28 vers les moyens d'emballage 29.
- Après cet arrêt en position d'évacuation, la succession 24 d'alvéoles -et donc le convoyeur correspondant- est entraînée jusqu'à la situation d'attente.
- En situation d'attente, le convoyeur avance comme celui qui le précède.

En situation de remplissage, le convoyeur avance de façon continue à une vitesse V1.

Entre la fin de la situation de remplissage et la position d'évacuation le convoyeur avance à la vitesse V2.

Entre la position d'évacuation et la situation d'attente le convoyeur avance à la vitesse V3.

La vitesse V3, est de l'ordre de 5 à 15 fois la vitesse V1.

La vitesse V2 est de l'ordre de 5 à 10 fois la vitesse V1.

Par conséquent, les vitesses V2 et V3, plus grandes que V1, peuvent être du même ordre de grandeur.

Le procédé de mise en oeuvre de l'installation est tel que, successivement :
- on amène les objets sur les moyens d'alimentation ;
- on ordonne et on cadence les objets de façon voulue ;
- on permet aux moyens d'amenée des objets de prendre les objets ainsi ordonnés et cadencés depuis la première position jusqu'à la seconde position ;
- dans la seconde position on permet à l'objet d'être pris par un alvéole de l'ensemble à deux convoyeurs ;
- on réalise un lot sur l'un des convoyeurs ;
- lorsque le lot est réalisé, on le transfère à la position d'évacuation ;
- on amène deux successions d'alvéoles des deux convoyeurs à se suivre à l'endroit de la position d'amenée ;
- on transfère un lot réalisé se trouvant sur l'un des convoyeurs vers les moyens d'emballage, éventuellement on débute l'emballage, pendant la réalisation du lot sur l'autre des convoyeurs.

On comprend que pendant qu'on remplit une succession 24 d'alvéoles 25, une autre succession 24 d'alvéoles 25 est transférée vers la position d'évacuation, puis vidée et enfin ramenée en position d'attente.

Le transfert, le vidage et le retour de cette succession interviennent en temps masqué pendant le remplissage de l'autre succession 24 d'alvéoles 25 ce qui ne ralentit pas le débit.

Le débit n'est pas non plus ralenti parce que le tambour des moyens 4 tourne de façon continue et que les alvéoles 25 se suivent en permanence.

Une telle installation permet par conséquent d'emballer des lots de l'ordre de 5 à 30 barquettes E à raison de l'ordre de 15 à 80 lots par minute.

## Revendications

1. Dispositif pour la constitution de lots successifs (L) distincts d'objets (E) juxtaposés comprenant :
- un ensemble (6) constitué par deux convoyeurs distincts (6a, 6b) placés côte à côte, ayant chacun une même succession (24) d'alvéoles (25) ou analogue, apte à recevoir chacune un lot d'objets juxtaposés ;
- des moyens d'amenée (4) des objets un à un transversalement dans un alvéole (25) de l'un ou l'autre des convoyeurs (6a, 6b), lorsqu'il se présente dans une certaine position d'amenée (19) située vers l'amont de l'ensemble (6) à deux convoyeurs ;
- des moyens d'entraînement (27a, 27b) de l'un et de l'autre des convoyeurs ;
- des moyens programmés de commande (30) du fonctionnement des moyens d'amenée (4) et des moyens d'entraînement (27a, 27b) de l'un et de l'autre des convoyeurs (6a, 6b) agencés pour que l'une des deux successions (24) d'alvéoles (25) une fois remplies d'objets juxtaposés soit transférée à une position d'évacuation des objets écartée vers l'aval sur l'ensemble (6) à deux convoyeurs (6a, 6b), pendant que l'autre des deux successions (24) d'alvéoles (25) soit transférée à la position d'amenée (19).

2. Dispositif pour la constitution de lots successifs (L) distincts d'objets (E) juxtaposés selon la revendication 1, **caractérisé en ce que** la longueur de l'ensemble à deux convoyeurs est telle qu'il comprend au moins deux successions (24) d'alvéoles (25).

3. Dispositif pour la constitution de lots successifs (L) distincts d'objets (E) juxtaposés selon la revendication 1 ou 2, **caractérisé en ce que** les moyens programmés de commande (30) sont tels que le convoyeur (6a, 6b) dont les alvéoles (25) successifs sont remplis au fur et à mesure grâce aux moyens d'amenée (4) soit entraîné en continu à une certaine vitesse V1 sensiblement- constante de façon coordonnée à celle des moyens d'amenée (4).

4. Dispositif pour la constitution de lots successifs (L) distincts d'objets (E) juxtaposés selon l'une quelconque des revendications 1 à 3, **caractérisé en ce que** les moyens programmés de commande (30) sont tels qu'une fois que le dernier alvéole (25) du convoyeur (6a, 6b) est rempli, le convoyeur (6a, 6b) est entraîné à une certaine vitesse V2 jusqu'à la position d'évacuation.

5. Dispositif pour la constitution de lots successifs (L) distincts d'objets (E) juxtaposés selon la revendication 3 ou 4, **caractérisé en ce que** la vitesse V2 est plus grande que la vitesse V1.

6. Dispositif pour la constitution de lots successifs (L) distincts d'objets (E) juxtaposés selon la revendication 5, **caractérisé en ce que** la vitesse V2 est de l'ordre de 5 à 10 fois la vitesse V1.

7. Dispositif pour la constitution de lots successifs (L) distincts d'objets (E) juxtaposés selon l'une quelconque des revendications 1 à 6, **caractérisé en ce que** les moyens programmés de commande sont tels que la succession (24) d'alvéoles (25) d'un convoyeur (6a, 6b) étant amenée en position d'évacuation des objets, le convoyeur (6a, 6b) est arrêté perdant la durée permettant de vider les alvéoles (25) par transfert transversal des objets qui s'y trouvent.

8. Dispositif pour la constitution de lots successifs (L) distincts d'objets (E) juxtaposés selon l'une quelconque des revendications 1 à 7, **caractérisé en ce que** les moyens programmés de commande (30) sont tels qu'après arrêt du convoyeur (6a, 6b) avec les alvéoles (25) en position d'évacuation des objets, le convoyeur (6a, 6b) est entraîné à vitesse V3 jusqu'à ce que son premier alvéole amont vienne succéder à la position d'amenée au dernier alvéole aval de la succession (24) d'alvéoles (25) de l'autre convoyeur (6a, 6b) en cours de remplissage.

9. Dispositif pour la constitution de lots successifs (L) distincts d'objets (E) juxtaposés selon l'une quelconque des revendications 1 à 8, **caractérisé en ce que** la vitesse V3 est plus grande que la vitesse V1.

10. Dispositif pour la constitution de lots successifs (L) distincts d'objets (E) juxtaposés selon la revendication 9, **caractérisé en ce que** la vitesse V3 est de l'ordre de 5 à 15 fois la vitesse V1.

11. Dispositif pour la constitution de lots successifs (L) distincts d'objets (E) juxtaposés selon l'une quelconque des revendications 1 à 10, **caractérisé en ce que** la vitesse V3 est égale ou de l'ordre de 1,5 fois la vitesse V2.

12. Dispositif pour la constitution de lots successifs (L) distincts d'objets (E) juxtaposés selon l'une quelconque des revendications 1 à 11, **caractérisé en ce que** les deux convoyeurs (6a, 6b) se déplacent tous les deux et toujours dans le même sens.

13. Dispositif pour la constitution de lots successifs (L) distincts d'objets (E) juxtaposés selon l'une quelconque des revendications 1 à 12, **caractérisé en ce qu'**un alvéole (25) est agencé pour tenir un objet essentiellement par dessous et pour un alvéole d'extrémité latéralement en amont ou en aval, respectivement.

14. Dispositif pour la constitution de lots successifs (L) distincts d'objets (E) juxtaposés selon l'une quelconque des revendications 1 à 13, **caractérisé en ce que** les moyens d'amenée (4) des objets se présentent sous la forme d'un tambour (7) comportant une paroi périphérique (9) présentant au moins une rampe (10) de rayon croissant dans le sens de rotation normal du tambour, cette rampe étant terminée par une face radiale d'appui (11) formant logement (12) pour un objet.

15. Dispositif pour la constitution de lots successifs (L) distincts d'objets (E) juxtaposés selon la revendication 14, **caractérisé en ce qu'**il comporte plusieurs paires de rampes (10) et faces d'appui (11), par exemple quatre régulièrement disposées autour de l'axe (8) du tambour (7).

16. Dispositif pour la constitution de lots successifs (L) distincts d'objets (E) juxtaposés selon la revendication 14 ou 15, **caractérisé en ce que** le tambour (7) présente des flasques (13) sur lesquels sont ménagés les rampes (10) et faces d'appui (11) sont écartées par un espace vide (14) traversé par la partie extrême amont (5) de l'ensemble (6) à deux convoyeurs (6a, 6b).

17. Dispositif pour la constitution de lots successifs (L) distincts d'objets (E) juxtaposés selon l'une quelconque des revendications 14 à 16, **caractérisé en ce que** le tambour (7) des moyens d'amenée (4) pivote de façon continue.

18. Installation pour le conditionnement d'objets (E) en lots (L) d'objets juxtaposés qui comprend des moyens d'alimentation (1) en objets à l'aval desquels se trouve des moyens d'amenée (4) des objets d'un dispositif selon l'une quelconque des revendications 1 à 17.

19. Installation selon la revendication 18, **caractérisée en ce que** les moyens d'alimentation (1) en objets se présentent sous la forme d'un convoyeur.

20. Installation selon la revendication 18 ou 19, **caractérisée en ce que** les moyens d'alimentation (1) coopèrent avec une certaine première position d'un logement (12) des moyens d'amenée (4) et la position d'amenée de l'ensemble (6) à deux convoyeurs (6a, 6b) coopère avec une seconde position d'un logement (12) des moyens d'amenée (4), la seconde position succédant à la première.

21. Installation selon l'une quelconque des revendications 18 à 20, **caractérisée en ce que** les moyens d'amenée (4) sont à axe horizontal et transversal, la première et la seconde position du logement (12) des moyens d'amenée (4) étant à 90° l'une de l'autre, la première position étant placée à un niveau supérieur et la seconde position à un niveau inférieur.

22. Installation selon l'une quelconque des revendications 18 à 21, **caractérisée en ce qu'**elle comporte en outre des moyens associés (20) aux moyens d'alimentation (1) aptes à ordonner et cadencer les objets pour qu'ils présentent l'orientation, le positionnement, la disposition et l'écartement voulus.

23. Installation selon l'une quelconque des revendications 18 à 22, **caractérisée en ce que** les moyens (20) pour ordonner et cadencer les objets se présentent sous la forme d'une roue à palette radiale (21) commandée par des moyens moteur asservis aux moyens programmés de commande.

24. Installation selon l'une quelconque des revendications 18 à 23, **caractérisée en ce qu'**il lui est associé en outre des moyens d'emballage (29) situés vers la position d'évacuation des objets, ainsi que des moyens d'évacuation (28) des alvéoles et d'alimentation des moyens d'emballage.

25. Installation selon la revendication 24, **caractérisée en ce que** les moyens d'emballage (29) sont des moyens d'encaissage, de mise sous film ou analogue.

26. Installation selon la revendication 25, **caractérisée en ce que** les moyens d'évacuation (28) des alvéoles (25) et d'alimentation des moyens d'emballage (29) sont un poussoir, un robot ou analogue.

27. Procédé de mise en oeuvre de l'installation selon l'une quelconque des revendications 18 à 26 dans lequel, successivement :
- on amène les objets (E) sur les moyens d'alimentation (1) ;
- on ordonne et on cadence les objets de façon voulue ;
- on permet aux moyens d'amenée (4) des objets de prendre les objets ainsi ordonnés et cadencés depuis la première position jusqu'à la seconde position ;
- on amène deux successions d'alvéoles des deux convoyeurs à se suivre à l'endroit de la position d'amenée ;
- dans la seconde position on permet à l'objet d'être pris par un alvéole (25) de l'ensemble (6) à deux convoyeurs (6a, 6b) ;
- on réalise un lot (L) d'objets sur l'un des convoyeurs, pendant que l'on transfère un lot réalisé se trouvant sur l'autre des convoyeurs vers la position d'évacuation, éventuellement on débute l'emballage.
- lorsque le lot est réalisé, on le transfère à la position d'évacuation ;

28. Procédé selon la revendication 27, **caractérisé en ce qu'**il est spécialement destiné à des objets de forme prismatique aplatie, dont chaque côté peut avoir de l'ordre de quelques à une dizaine de centimètres, voire plus, et le poids de l'ordre de quelques dizaines à quelques centaines de grammes.

29. Procédé selon la revendication 28, **caractérisé en ce qu'**il permet d'emballer des lots de l'ordre de 5 à 30 objets chacun à raison de l'ordre de 15 à 80 lots par minute.

## Patentansprüche

1. Vorrichtung zur Bildung von unterschiedlichen aufeinander folgenden Losen (L) von nebeneinander gelagerten Gegenständen (E), umfassend:
- einen aus zwei unterschiedlichen, Seite an Seite angeordneten Fördereinrichtungen (6a, 6b) mit jeweils einer und derselben Folge (24) von Waben (25) oder der dergleichen, jeweils zur Aufnahme eines Loses von nebeneinander gelagerten Objekten geeigneten Aufbau (6);
- Zuführmittel (4) zum Zuführen der Gegenstände einzeln quer in eine Wabe (25) der einen oder der anderen Fördereinrichtung (6a, 6b), wenn er sich in einer bestimmten, sich oberhalb des Aufbaus (6) mit zwei Fördereinrichtungen befindenden Zuführposition (19) präsentiert;
- Antriebsmittel (27a, 27b) der einen und der anderen Fördereinrichtung;
- programmierte Steuermittel (30) des Betriebs der Zuführmittel (4) und der Antriebsmittel (27a, 27b) der einen und der anderen Fördereinrichtung (6a, 6b), die angeordnet sind, damit eine der zwei Folgen (24) von Waben (25) nach ihrem Befüllen mit nebeneinander gelagerten Objekten in eine nach unten auf dem Aufbau (6) mit zwei Fördereinrichtungen (6a, 6b) beabstandeten Austragposition der Gegenstände transferiert wird, während die andere der beiden Folgen (24) von Waben (25) in die Zuführposition (19) transferiert wird.

2. Vorrichtung für die Bildung von unterschiedlichen aufeinander folgenden Losen (L), von nebeneinander gelagerten Gegenstände (E) gemäß Anspruch 1, **dadurch gekennzeichnet, dass** die Länge des Aufbaus mit zwei Fördereinrichtungen derart ist, dass er wenigstens zwei Folgen (24) von Waben (25) umfasst.

3. Vorrichtung für die Bildung von unterschiedlichen aufeinander folgenden Losen (L), von nebeneinander gelagerten Gegenstände (E) gemäß Anspruch 1 oder 2, **dadurch gekennzeichnet, dass** die programmierten Steuermittel (30) derart sind, dass die Fördereinrichtung (6a, 6b), deren aufeinander folgende Waben (25) nach und nach mittels der entweder im Dauerbetrieb bei einer bestimmten, deutlich konstanten, mit der der Zuführmittel (4) koordinierten Geschwindigkeit V1 angetriebenen Zuführmittel (4) befüllt werden.

4. Vorrichtung für die Bildung von unterschiedlichen aufeinander folgenden Losen (L), von nebeneinander gelagerten Gegenstände (E) gemäß Anspruch 1 bis 3, **dadurch gekennzeichnet, dass** die programmierten Steuermittel (30) derart sind, dass nach dem Befüllen der letzten Wabe (25) der Fördereinrichtung (6a, 6b) die Fördereinrichtung (6a, 6b) in einer bestimmten Geschwindigkeit V2 bis zur Austragposition angetrieben wird.

5. Vorrichtung für die Bildung von unterschiedlichen aufeinander folgenden Losen (L), von nebeneinander gelagerten Gegenstände (E) gemäß Anspruch 3 bis 4, **dadurch gekennzeichnet, dass** die Geschwindigkeit V2 höher ist als die Geschwindigkeit V1.

6. Vorrichtung für die Bildung von unterschiedlichen aufeinander folgenden Losen (L), von nebeneinander gelagerten Gegenstände (E) gemäß Anspruch 5, **dadurch gekennzeichnet, dass** die Geschwindigkeit V2 in der Größenordnung von 5 bis 10 Mal die Geschwindigkeit V1 ist.

7. Vorrichtung für die Bildung von unterschiedlichen aufeinander folgenden Losen (L), von nebeneinander gelagerten Gegenstände (E) gemäß Anspruch 1 bis 6, **dadurch gekennzeichnet, dass** die programmierten Steuermittel derart sind, dass die Folge (24) von Waben (25) einer Fördereinrichtung (6a, 6b) in die Austragposition der Gegenstände verbracht wird, die Fördereinrichtung (6a, 6b) während der das Ausleeren der Waben (25) durch Quertransfer der sich dort befindenden Gegenstände erlaubenden Dauer angehalten wird.

8. Vorrichtung für die Bildung von unterschiedlichen aufeinander folgenden Losen (L), von nebeneinander gelagerten Gegenstände (E) gemäß Anspruch 1 bis 7, **dadurch gekennzeichnet, dass** die programmierten Steuermittel (30) derart sind, dass die Fördereinrichtung (6a, 6b) nach dem Stillstand der Fördereinrichtung (6a, 6b) mit den Waben (25) in der Austragposition der Gegenstände in der Geschwindigkeit V3 angetrieben wird, bis ihre erste Wabe oberhalb in die Zuführposition der letzten Wabe unterhalb der Folge (24) von Waben (25) der anderen Fördereinrichtung (6a, 6b) in der Befüllung folgt.

9. Vorrichtung für die Bildung von unterschiedlichen aufeinander folgenden Losen (L), von nebeneinander gelagerten Gegenstände (E) gemäß Anspruch 1 bis 8, **dadurch gekennzeichnet, dass** die Geschwindigkeit V3 höher ist als die Geschwindigkeit V1.

10. Vorrichtung für die Bildung von unterschiedlichen aufeinander folgenden Losen (L), von nebeneinander gelagerten Gegenstände (E) gemäß Anspruch 9, **dadurch gekennzeichnet, dass** die Geschwindigkeit V3 in der Größenordnung von 5 bis 15 Mal höher ist als die Geschwindigkeit V1.

11. Vorrichtung für die Bildung von unterschiedlichen aufeinander folgenden Losen (L), von nebeneinander gelagerten Gegenstände (E) gemäß Anspruch 1 bis 10, **dadurch gekennzeichnet, dass** die Geschwindigkeit V3 gleich oder in der Größenordnung von 1,5 Mal höher ist als die Geschwindigkeit V2.

12. Vorrichtung für die Bildung von unterschiedlichen aufeinander folgenden Losen (L), von nebeneinander gelagerten Gegenstände (E) gemäß Anspruch 1 bis 11, **dadurch gekennzeichnet, dass** die zwei Fördereinrichtungen (6a, 6b) sich beide immer in derselben Richtung verschieben.

13. Vorrichtung für die Bildung von unterschiedlichen aufeinander folgenden Losen (L), von nebeneinander gelagerten Gegenstände (E) gemäß Anspruch 1 bis 12, **dadurch gekennzeichnet, dass** eine Wabe (25) angeordnet ist, um einen Gegenstand im Wesentlichen von unten und um eine Endwabe seitlich jeweils oberhalb oder unterhalb zu halten.

14. Vorrichtung für die Bildung von unterschiedlichen aufeinander folgenden Losen (L), von nebeneinander gelagerten Gegenstände (E) gemäß Anspruch 1 bis 13, **dadurch gekennzeichnet, dass** die Zuführmittel (4) der Gegenstände die Form einer Trommel (7) mit einer wenigstens eine Rampe (10) mit in der normalen Rotationsrichtung der Trommel steigendem Radius aufweisenden Außenwand (9) aufweisen, wobei diese Rampe durch eine eine Aufnahme (12) für einen Gegenstand bildende radiale Stützseite (11) endet.

15. Vorrichtung für die Bildung von unterschiedlichen aufeinander folgenden Losen (L), von nebeneinander gelagerten Gegenstände (E) gemäß Anspruch 14, **dadurch gekennzeichnet, dass** sie mehrere, z. B. vier regelmäßig um die Achse (8) der Trommel (7) angeordnete Rampenpaare (10) und Stützflächen (11) umfasst.

16. Vorrichtung für die Bildung von unterschiedlichen aufeinander folgenden Losen (L), von nebeneinander gelagerten Gegenstände (E) gemäß Anspruch 14 oder 15, **dadurch gekennzeichnet, dass** die Trommel (7) sind durch einen durch den oberen Endteil (5) des Aufbaus (6) mit zwei Fördereinrichtungen (6a, 6b) durchquerten leeren Raum (14) beabstandeten Flansche (13) aufweist, auf denen die Rampen (10) und Stützflächen (11) angeordnet.

17. Vorrichtung für die Bildung von unterschiedlichen aufeinander folgenden Losen (L), von nebeneinander gelagerten Gegenstände (E) gemäß Anspruch 14 bis 16, **dadurch gekennzeichnet, dass** die Trommel (7) der Zuführmittel (4) im Dauerbetrieb schwenkt.

18. Anlage für die Verpackung von Gegenständen (E) in Losen (L) von nebeneinander gelagerten Gegenständen, die Versorgungsmittel (1) von Gegenständen umfasst, unterhalb derer sich Zuführmittel (4) der Gegenstände einer Vorrichtung gemäß Anspruch 1 bis 17 befinden.

19. Anlage gemäß Anspruch 18, **dadurch gekennzeichnet, dass** die Versorgungsmittel (1) an Gegenständen die Form einer Fördereinrichtung aufweisen.

20. Anlage gemäß Anspruch 18 oder 19, **dadurch gekennzeichnet, dass** die Versorgungsmittel (1) mit einer bestimmten ersten Position einer Aufnahme (12) der Zuführmittel (4) zusammenwirken und die Zuführposition des Aufbaus (6) mit zwei Fördereinrichtungen (6a, 6b) mit einer zweiten Position einer Aufnahme (12) der Zuführmittel (4) zusammenwirkt, wobei die zweite Position auf die erste folgt.

21. Anlage gemäß Anspruch 18 bis 20, **dadurch gekennzeichnet, dass** die Zuführmittel (4) eine horizontale und transversale Achse aufweisen, wobei die erste und die zweite Position der Aufnahme (12) der Zuführmittel (4) zueinander einen 90° Winkel aufweisen, wobei die erste Position an einem oberen Niveau und die zweite Position in einem unteren Niveau platziert ist.

22. Anlage gemäß Anspruch 18 bis 21, **dadurch gekennzeichnet, dass** sie darüber hinaus den Versorgungsmitteln (1) zugeordnete, zum Ordnen und Takten der Gegenstände geeignete Mittel (20) umfasst, damit sie die gewünschte Ausrichtung, Positionierung, Anordnung und Beabstandung aufweisen.

23. Anlage gemäß Anspruch 18 bis 22, **dadurch gekennzeichnet, dass** die Mittel (20) zum Ordnen und Takten der Gegenstände die Form eines von programmierten Steuermitteln abhängigen Motormittel gesteuerten Rades mit radialen Schaufeln (21) aufweisen.

24. Anlage gemäß Anspruch 18 bis 23, **dadurch gekennzeichnet, dass** ihr darüber hinaus zur Austragposition der Gegenstände hin liegende Verpackungsmittel (29) sowie Austragmittel (28) der Waben und Versorgungsmittel der Verpackungsmittel zugeordnet sind.

25. Anlage gemäß Anspruch 24, **dadurch gekennzeichnet, dass** die Verpackungsmittel (29) Mittel zur Verpackung in Kisten, unter Folie oder dergleichen sind.

26. Anlage gemäß Anspruch 25, **dadurch gekennzeichnet, dass** die Austragmittel (28) der Waben (25) und Versorgungsmittel der Verpackungsmittel (29) ein Mitnehmer, ein Roboter oder dergleichen sind.

27. Umsetzungsverfahren der Anlage gemäß Anspruch 18 bis 26, in dem man aufeinander folgend:
- die Gegenstände (E) auf die Versorgungsmittel (1) verbringt;
- die Gegenstände nach Wunsch ordnet und taktet;
- den Zuführmitteln (4) der Gegenstände das Aufnehmen der somit geordneten und getakteten Gegenstände von der ersten Position bis zur letzten Position erlaubt;
- zwei Folgen von Waben der beiden Förderer dazu bringt, sich zum Ort der Zuführposition zu folgen;
- in der zweiten Position dem Gegenstand ermöglicht, durch eine Wabe (25) des Aufbaus (6) mit zwei Fördereinrichtungen (6a, 6b) aufgenommen zu werden;
- ein Los (L) von Gegenständen auf einem der Förderereinrichtungen realisiert, während man ein realisiertes, sich auf der anderen Fördereinrichtung befindendes Los zur Austragposition transferiert und eventuell die Verpackung beginnt.
- wenn das Los realisiert ist, man es zur Austragposition transferiert.

28. Verfahren gemäß Anspruch 27, **dadurch gekennzeichnet, dass** es speziell für Gegenstände in abgeflachter Prismaform bestimmt ist, von denen jede Seite die Größenordnung von einigen Zentimetern bis zu einigen Dezimetern oder mehr haben kann, und das Gewicht die Größenordnung von einigen Dutzend bis einigen hundert Gramm.

29. Verfahren gemäß Anspruch 28, **dadurch gekennzeichnet, dass** es das Verpacken der Lose in der Größenordnung von 5 bis 30 Gegenständen jeweils in der Größenordnung von 15 bis 80 Losen pro Minute erlaubt.

## Claims

1. Device for constituting successive distinct batches (L) of juxtaposed objects (E), comprising:
- an assembly (6) consisting of two distinct conveyors (6a, 6b) placed side by side, each having an identical succession (24) of cells (25) or the like, each able to receive a batch of juxtaposed objects;
- feed means (4) for feeding the objects one by one transversely into a cell (25) of one or the other of the conveyors (6a, 6b) when it is in a certain feed position (19) located towards the upstream end of the assembly (6) comprising two conveyors;
- drive means (27a, 27b) for driving each of the conveyors;
- programmed control means (30) for controlling the operation of the feed means (4) and of the drive means (27a, 27b) of each of the conveyors (6a, 6b) arranged so that one of the two successions (24) of cells (25), once filled with juxtaposed objects, is transferred to a remote object removal position located towards the downstream end on the assembly (6) comprising two conveyors (6a, 6b), while the other of the two successions (24) of cells (25) is transferred to the feed position (19).

2. Device for constituting successive distinct batches (L) of juxtaposed objects (E) according to Claim 1, **characterized in that** the length of the assembly comprising two conveyors is such that it comprises at least two successions (24) of cells (25).

3. Device for constituting successive distinct batches (L) of juxtaposed objects (E) according to Claim 1 or 2, **characterized in that** the programmed control means (30) are such that the conveyor (6a, 6b) whose successive cells (25) are gradually being filled by the feed means (4) is continuously driven at a certain substantially constant speed V1 in a manner coordinated with the speed of the feed means (4).

4. Device for constituting successive distinct batches (L) of juxtaposed objects (E) according to any one of Claims 1 to 3, **characterized in that** the programmed control means (30) are such that, once the last cell (25) of the conveyor (6a, 6b) has been filled, the conveyor (6a, 6b) is driven at a certain speed V2 to the removal position.

5. Device for constituting successive distinct batches (L) of juxtaposed objects (E) according to Claim 3 or 4, **characterized in that** the speed V2 is greater than the speed V1.

6. Device for constituting successive distinct batches (L) of juxtaposed objects (E) according to Claim 5, **characterized in that** the speed V2 is around 5 to 10 times the speed V1.

7. Device for constituting successive distinct batches (L) of juxtaposed objects (E) according to any one of Claims 1 to 6, **characterized in that** the programmed control means are such that, once the succession (24) of cells (25) of a conveyor (6a, 6b) has been taken to the object removal position, the conveyor (6a, 6b) is stopped for the time taken to empty the cells (25) by transversely transferring the objects contained therein.

8. Device for constituting successive distinct batches (L) of juxtaposed objects (E) according to any one of Claims 1 to 7, **characterized in that** the programmed control means (30) are such that, once the conveyor (6a, 6b) has been stopped with the cells (25) in the object removal position, the conveyor (6a, 6b) is driven at speed V3 until its first upstream cell reaches the feed position of the last downstream cell of the succession (24) of cells (25) of the other conveyor (6a, 6b) which is being filled.

9. Device for constituting successive distinct batches (L) of juxtaposed objects (E) according to any one of Claims 1 to 8, **characterized in that** the speed V3 is greater than the speed V1.

10. Device for constituting successive distinct batches (L) of juxtaposed objects (E) according to Claim 9, **characterized in that** the speed V3 is around 5 to 15 times the speed V1.

11. Device for constituting successive distinct batches (L) of juxtaposed objects (E) according to any one of Claims 1 to 10, **characterized in that** the speed V3 is equal to or around 1.5 times the speed V2.

12. Device for constituting successive distinct batches (L) of juxtaposed objects (E) according to any one of Claims 1 to 11, **characterized in that** the two conveyors (6a, 6b) both move and always move in the same direction.

13. Device for constituting successive distinct batches (L) of juxtaposed objects (E) according to any one of Claims 1 to 12, **characterized in that** a cell (25) is designed to hold an object essentially at the bottom and, in respect of an end cell, laterally upstream or downstream, respectively.

14. Device for constituting successive distinct batches (L) of juxtaposed objects (E) according to any one of Claims 1 to 13, **characterized in that** the means (4) for feeding the objects are in the form of a drum (7) comprising a peripheral wall (9) having at least one ramp (10) of increasing radius in the normal direction of rotation of the drum, this ramp ending in a radial bearing face (11) forming a housing (12) for an object.

15. Device for constituting successive distinct batches (L) of juxtaposed objects (E) according to Claim 14, **characterized in that** it comprises a number of pairs of ramps (10) and bearing faces (11), for example four pairs placed at regular intervals around the axle (8) of the drum (7).

16. Device for constituting successive distinct batches (L) of juxtaposed objects (E) according to Claim 14 or 15, **characterized in that** the drum (7) has flanges (13) on which the ramps (10) and bearing faces (11) are formed are spaced apart by an empty space (14) which is passed through by the upstream end part (5) of the assembly (6) comprising two conveyors (6a, 6b).

17. Device for constituting successive distinct batches (L) of juxtaposed objects (E) according to any one of Claims 14 to 16, **characterized in that** the drum (7) of the feed means (4) pivots continuously.

18. Installation for packaging objects (E) into batches (L) of juxtaposed objects which comprises object supply means (1), downstream of which there are object feed means (4) of a device according to any one of Claims 1 to 17.

19. Installation according to Claim 18, **characterized in that** the object supply means (1) are in the form of a conveyor.

20. Installation according to Claim 18 or 19, **characterized in that** the supply means (1) cooperate with a certain first position of a housing (12) of the feed means (4) and the feed position of the assembly (6) comprising two conveyors (6a, 6b) cooperates with a second position of a housing (12) of the feed means (4), the second position coming after the first.

21. Installation according to any one of Claims 18 to 20, **characterized in that** the feed means (4) have a horizontal and transverse axis, the first and second positions of the housing (12) of the feed means (4) being at 90° to one another, the first position being placed at a higher level and the second position at a lower level.

22. Installation according to any one of Claims 18 to 21, **characterized in that** it also comprises means (20) associated with the supply means (1), said means (20) being able to order and set the pace of the objects so that they have the desired orientation, position, arrangement and spacing.

23. Installation according to any one of Claims 18 to 22, **characterized in that** the means (20) for ordering and setting the pace of the objects are in the form of a wheel (21) with radial paddles, said wheel being controlled by drive means slaved to the programmed control means.

24. Installation according to any one of Claims 18 to 23, **characterized in that** also associated with said installation are packing means (29), located close to the object removal position, and also means (28) for removing the objects from the cells and supplying them to the packing means.

25. Installation according to Claim 24, **characterized in that** the packing means (29) are means for placing the objects in a box, covering the objects with film or the like.

26. Installation according to Claim 25, **characterized in that** the means (28) for removing the objects from the cells (25) and supplying them to the packing means (29) are a pusher, a robot or the like.

27. Method of operating the installation according to any one of Claims 18 to 26, in which, successively:
- the objects (E) are conveyed on the supply means (1);
- the order and pace of the objects is set in the desired manner;
- the means (4) for feeding the objects are allowed to take the objects thus ordered and paced from the first position to the second position;
- two successions of cells of the two conveyors are brought one after the other to the feed position;
- in the second position the object is allowed to be taken by a cell (25) of the assembly (6) comprising two conveyors (6a, 6b);
- a batch (L) of objects is produced on one of the conveyors while a finished batch on the other of the conveyors is transferred to the removal position and possibly packing is started;
- once the batch is finished it is transferred to the removal position.

28. Method according to Claim 27, **characterized in that** it is specially designed for objects having a flattened prismatic shape, each side of which may have a length of from a few centimetres to around ten centimetres or even more, and having a weight of from a few tens of to a few hundred grams.

29. Method according to Claim 28, **characterized in that** it makes it possible to pack batches of around 5 to 30 objects each at a rate of from 15 to 80 batches per minute.
